# EUROPEAN PATENT SPECIFICATION

(11) **EP 1 440 832 B1**
(45) Date of publication and mention of the grant of the patent: **14.01.2009**
(21) Application number: 02760587.2
(22) Date of filing: 08.08.2002
(51) Int. Cl.: B60K 1/04, B60K 7/00, B62D 21/04, B62D 21/16, B62D 21/17, H01M 2/10

(54) **Electric car body structure**
Aufbaukonstruktion für elektrisches Fahrzeug
Structure de carrosserie de véhicule automobile électrique

(30) Priority: 11.06.2002 JP 2002169900
(43) Date of publication of application: 28.07.2004
(73) Proprietor: Japan Science and Technology Agency, Kawaguchi-shi Saitama (JP)
(72) Inventor: SHIMIZU, Hiroshi, Kamakura-shi, Kanagawa 248-0034 (JP)
(74) Representative: Carstairs, James Campbell
(86) International application number: PCT/JP2002/008112
(87) International publication number: WO 2003/104009

(56) References cited:
- EP-A- 0 887 871
- DE-A1- 19 708 404
- FR-A- 1 011 256
- FR-A- 2 447 617
- GB-A- 1 179 141
- JP-A- 10 278 596
- JP-A- 10 322 809
- JP-U- 6 012 149
- US-A- 5 501 289
- US-A- 5 833 023
- SHIMIZU H ET AL: "THE ECO VEHICLE PROJECT" 13 October 1996 (1996-10-13), EVS - 13. 13TH. INTERNATIONAL ELECTRIC VEHICLE SYMPOSIUM. OSAKA, OCT. 13 - 16, 1996. SESSIONS 1A - 4H, EVS. INTERNATIONAL ELECTRIC VEHICLE SYMPOSIUM, TOKYO, JEVA, JP, PAGE(S) 436-441 , XP000687915 * the whole document *

## Description

### Technical Field

The present invention relates to a body construction of an eight-wheel drive electric car, and in particular, it relates to a construction of a floor portion of its car body.

### Background Art

Since an electric car is required of being equipped with a large number of batteries in its car body, the inventor of the present invention and others have proposed, in Japanese Unexamined Patent Application Publication No. 10-278596, a battery-built-in-frame construction for rationally accommodating the batteries in a floor portion of the car body.

The above-mentioned known battery-built-in-frame construction forms the floor portion of the car body by arranging a plurality of hollow frames having a rectangular cross-section for accommodating the batteries therein so as to lie parallel to each other in the longitudinal direction of the car and hence has advantages that the batteries can be rationally accommodated and also the floor surface can be made flat.

US 5,501,289 describes a floor structure of an electric vehicle powered by batteries. The floor structure comprises an upper unit and a lower unit which are coupled together to create an enclosed space. A grid structure divides the enclosed space into a plurality of container spaces, each container space sized to contain a battery.

Shimizu H. et al. in "The Eco Vehicle Project", 13th International Electric Vehicle Symposium, October 1996, pages 436-441, XP000687915 describes an ultra-small, lightweight electric vehicle that includes an in-wheel motor drive system, a battery frame structure and a battery management system. The battery frame structure includes twin centre frames and two, shorter side frames for accommodating batteries. The battery management system involves placing the batteries on trays that include heat pipes, which equilibrate the temperatures of the batteries such that the batteries can be charged evenly.

### Disclosure of Invention

However, the above-mentioned known battery-built-in-frame construction of JP10-278596 has drawbacks that, since a large number of batteries are accommodated in a row in each long frame, when one of the batteries in the row malfunctions, it takes a long time to replace the malfunctioning battery with a new one, and also since each power line is limited to be led out from the front end or rear end battery, power lines for feeding a power to drive motors remote from the battery become longer and also their wiring becomes complicated.

In view of the above-mentioned circumstances, an object of the present invention is to offer a body construction of an electric car, in which a flat floor construction of the car body allowing batteries to be easily built therein and removed therefrom and to be accommodated under the floor in a space-effective manner is formed and in which power lines are rationally wired.

In order to achieve the above-mentioned object,
(1) the present invention provides a body construction of an eight-wheel drive electric car comprising: a front wheel frame for supporting front wheels; a rear wheel frame for supporting rear wheels; a backbone member having an approximately rectangular hollow cross-section, and coupling the front wheel frame to the read wheel frame, a plurality of battery-accommodating hollow frames disposed to the right and left side surfaces of the backbone member so as to lie parallel to each other and perpendicular to the longitudinal direction of the backbone member; batteries accommodated in the hollow frames for feeding power to a plurality of in-wheel motors built in respective wheel, wherein the in-wheel motors and the batteries are respectively divided into two systems; the batteries of one system are accommodated in the hollow frames disposed to one side of the backbone member and supply power to front front-wheels and rear rear-wheels, and the batteries of the other system are accommodated in the hollow frames disposed to the other side of the backbone member and supply power to rear front-wheels and front rear-wheels.
(2) In the body construction of an eight-wheel drive electric car set forth in the foregoing (1), inverters for the in-wheel motors are arranged next to the corresponding in-wheel motors either in the front wheel frame or in the rear wheel frame and power lines from the batteries of said systems to the inverters for respective in-wheel motors are laid down so as to extend through the hollow of the backbone member.
(3) In the body construction of an eight-wheel drive electric car set forth in the foregoing (2), the front wheel frame and the rear wheel frame is formed so as to have a frame structure having substantially the same height as those of the battery-accommodating hollow frames and the inverters are arranged in the frame structure.

### Brief Description of the Drawings

Fig. 1 illustrates a body construction of an eight-wheel electric car according to a first embodiment of the present invention.
Fig. 2 is a partial perspective view illustrating a backbone member and hollow frames of the body construction of the eight-wheel electric car according to the first embodiment of the present invention.
Fig. 3 illustrates the wiring of electrical power lines in the first embodiment of the present invention.
Fig. 4 is a partial perspective view illustrating a backbone member and hollow frames of a body construction of an electric car according to a second embodiment of the present invention.

### Best Mode for Carrying Out the Invention

Embodiments of the present invention will be described in detail with reference to the accompanying drawings.

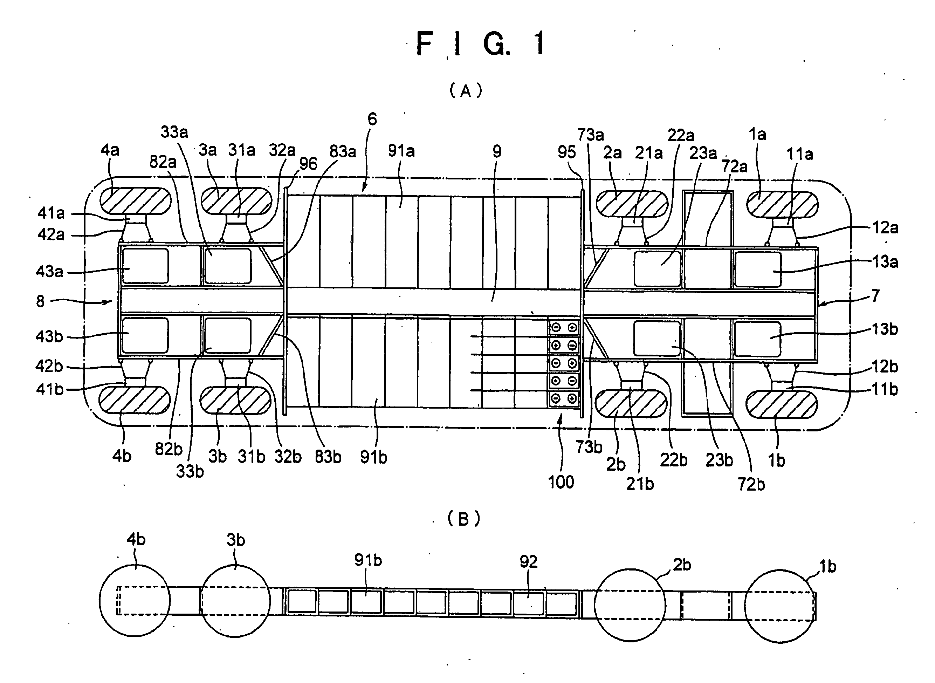

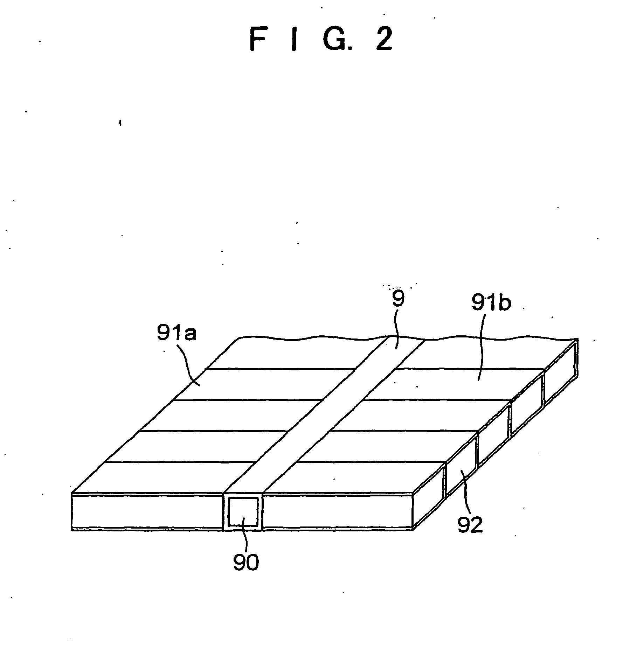

Fig. 1 illustrates a body construction of an eight-wheel electric car according to a first embodiment of the present invention, wherein Fig. 1(A) is a plan view and Fig. 1(B) is a side view. Fig. 2 is a partial perspective view illustrating a backbone member and hollow frames of the body construction of the electric car.

In this embodiment, there is provided a chassis 6 of an eight-wheel-drive electric car, having front front-wheels 1a and 1b, front rear-wheels 2a and 2b, rear front-wheels 3a and 3b, and rear rear-wheels 4a and 4b and having drive motors (in-wheel motors) 11a and 11b, 21a and 21b, 31a and 31b, and 41a and 41b respectively built in the corresponding wheels.

The skeleton of the chassis 6 is formed by a front wheel frame 7, a rear wheel frame 8, and a backbone member 9 lying between the frames 7 and 8 so as to rigidly couple the frames 7 and 8 with each other.

The front wheel frame 7 made from a structural member such as a channel steel is formed by frame members 72a and 72b, the former having suspension mechanisms 12a and 12b fixed thereto for respectively suspending the front front-wheels 1a and 1b and the latter having suspension mechanisms 22a and 22b fixed thereto for respectively suspending the front rear-wheels 2a and 2b, and is formed by reinforcing members 73a and 73b made from, for example, an H-section steel for increasing the rigidity of a coupling portion between the backbone member 9 and the front wheel frame 7.

The rear wheel frame 8 also made from a structural member such as a channel steel is formed by frame members 82a and 82b, the former having suspension mechanisms 32a and 32b fixed thereto for respectively suspending the rear front-wheels 3a and 3b and the latter having suspension mechanisms 42a and 42b fixed thereto for respectively suspending the rear rear-wheels 4a and 4b, and is formed by reinforcing members 83a and 83b made from, for example, an H-section steel for increasing the rigidity of a coupling portion between the backbone member 9 and the rear wheel frame 8.

As shown in Fig. 2, the backbone member 9 includes a hollow 90 therein having a rectangular cross-section and has pluralities of battery-accommodating hollow frames 91a and 91b made from an aluminum material formed by, for example, drawing, welded to both sides of the backbone member 9 so as to lie perpendicular to the backbone member 9. Each of the battery-accommodating hollow frames 91a and 91b has a hollow 92 for accommodating a group of batteries (not shown).

Also, the chassis 6 has reinforcing members 95 and 96 for reinforcing the strengths of the front and rear portions of the battery-accommodating hollow frames 91a and 91b and for improving the rigidities of the coupling portions between the front wheel frame 7 and the backbone member 9 and between the rear wheel frame 8 and the same.

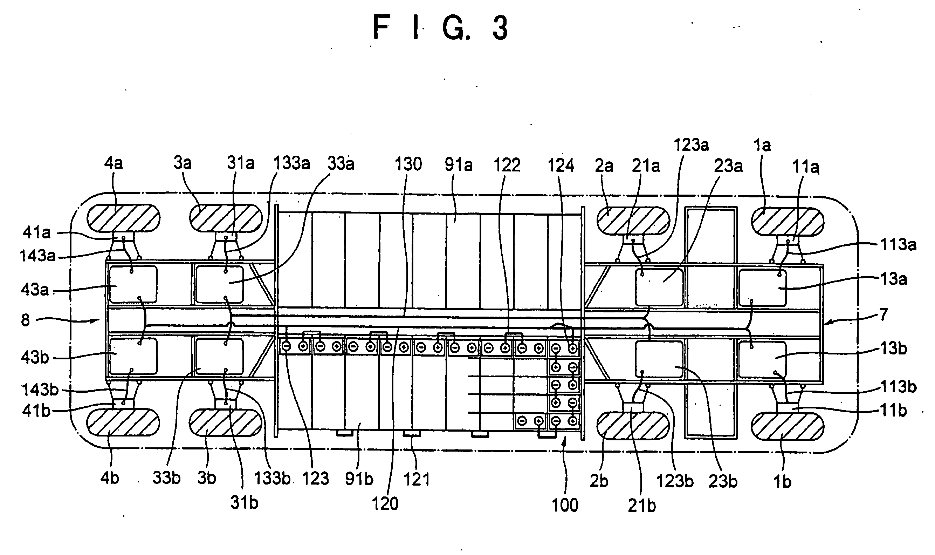

Fig. 3 illustrates the wiring of electrical power lines in the first embodiment of the present invention. Although the power lines are not visible from the above since they are actually arranged in the hollow 90 of the backbone member 9 (see Fig. 2), they are illustrated in Fig. 3 so as to be seen through an upper plate of the backbone member 9 for facilitating the understanding of the wiring.

As shown in Fig. 3, the batteries are divided into two systems; batteries 100 of a first system are accommodated in the hollows 92 of the corresponding battery-accommodating hollow frames 91b, and batteries of a second system (not shown) are accommodated in the hollows 92 of the corresponding battery-accommodating hollow frames 91a. An output of the batteries 100 of the first system is connected to front front-wheel inverters 13a and 13b and to rear rear-wheel inverters 43a and 43b via power lines 120 of the first system; furthermore, the output is connected from the inverters 13a and 13b to the drive motors 11a and 11b via three-phase power lines 113a and 113b, respectively, and is also connected from the inverters 43a and 43b to the drive motors 41a and 41b via three-phase power lines 143a and 143b, respectively.

Likewise, an output of the batteries of the second system is connected to front rear-wheel inverters 23a and 23b and to rear front-wheel inverters 33a and 33b via power lines 130 of the second system; furthermore, the output is connected from the inverters 23a and 23b to the drive motors 21a and 21b via three-phase power lines 123a and 123b, respectively, and is also connected from the inverters 33a and 33b to the drive motors 31a and 31b via three-phase power lines 133a and 133b, respectively.

The front wheel frame 7 and the rear wheel frame 8 are formed so as to have a frame structure having substantially the same height as those of the battery-accommodating hollow frames 91a and 91b so that the foregoing inverters 13a, 13b, 23a, and 23b, or 33a, 33b, 43a, and 43b are arranged in the corresponding frame structure.

Since the power lines 120 and 130 of the respective first and second systems are arranged in the hollow 90 of the backbone member 9, even when a strong shock caused by a side impact or the like is exerted on the power lines 120 and 130, they are free from damage. Also, when portions of the front wheel frame 7 and the rear wheel frame 8, which are coupled to the backbone member 9 and through which the power lines extend, are formed so as to have a channel structure, the safety of the power lines can be further improved.

Since the batteries accommodated in each of the battery-accommodating hollow frames 91a and 91b are required to be connected in series so as to provide a high voltage, the batteries in each of the hollow frames 91a and 91b are connected in series, and two groups of batteries in the adjacent hollows 92 are connected with each other either by an external connecting wire 121 at the outer side of the batteries or by an internal connecting wire 122 at the center side thereof. With this structure, the internal connecting wires 122 are disposed in the hollow 90 of the backbone member 9, and automatic connecting terminals, through which electrodes of the innermost batteries are automatically connected to the corresponding internal connecting wires 122 when the groups of batteries are inserted into the corresponding hollows 92 of the hollow frames 91a and 91b, are also disposed in the hollow 90. Also, a negative electrode 123 and a positive electrode 124 of the first system are connected to the corresponding power lines 120 of the first system by using corresponding automatic connecting terminals.

The backbone member 9 and the frames 7 and 8 may be used as negative lines of the power lines 120 of the first system and the power lines 130 of the second system.

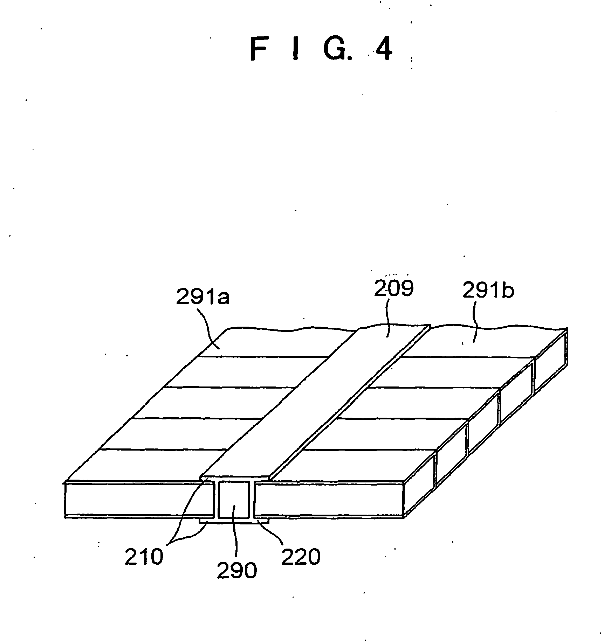

Fig. 4 is a partial perspective view illustrating a backbone member and hollow frames of a body construction of an electric car, having a different cross-section from that of the body construction according to the first embodiment shown in Fig. 2, according to a second embodiment of the present invention.

As shown in the figure, a backbone member 209 has a sectional shape of a Greek numeral II and has a hollow 290 formed therein. With the structure of the backbone member 209, battery-accommodating hollow frames 291a and 291b are sandwiched between an upper plate 210 and a lower plate 220 and are fixed to the backbone member 209 by welding or the like, thereby increasing the strengths of the battery-accommodating hollow frames 291a and 291b which are likely deformed by a shock.

As described above, according to the present invention, a flat floor construction of the car body allowing batteries to be easily built therein or removed therefrom and to be accommodated under the floor in a space-effective manner is formed and also power lines are rationally wired.

Also, since the power lines are rationally wired, a body construction having a reduced risk of fire or the like even in the event of emergency such as a car collision is provided.

In addition, a battery accommodating construction suitable for dividing a power source into two systems is provided.

As described above in detail, the present invention offers the following advantages.
(A) Since a backbone member for coupling a front wheel frame and a rear wheel frame is provided and hollow frames for accommodating batteries are fixed to both sides of the backbone member so as to lie perpendicular to the longitudinal direction of the backbone member, the number of batteries in each hollow frame can be reduced, thereby allowing the batteries to be easily built in the hollow frames or replaced with new ones. Also, since the batteries are divided into two systems, even when any of the batteries of one of the systems are damaged due to a side impact, the other system can be secured.
(B) Since a hollow of the backbone member is used as a space for wiring power lines from the batteries to drive motors, the power lines can be easily wired and also protected against a collision or the like, thereby eliminating risks of getting an electric shock, breaking of a fire, and the like.
(C) Since connecting wires for connecting groups of batteries accommodated in the corresponding hollow frames are also accommodated in the hollow of the backbone member and automatic detachable mechanisms are employed for automatically connecting the connecting wires and contacts of the corresponding batteries, the batteries are very easily connected.
(D) Since the hollow of the backbone member is used as a space for wiring the power lines, the power lines from the batteries to inverters of the corresponding motors can be wired in the shortest way.

### Industrial Applicability

According to the present invention, a body construction of an electric car which emits no toxic exhaust gas and which is environmentally-friendly is improved, and hence it is especially suitable for use in a field of an electric car.

## Claims

1. A body construction (6) of an eight-wheel drive electric car, in which batteries for feeding a power to a plurality of in-wheel motors are accommodated in a floor portion of a car body, **characterized by** :
a front wheel frame (7) for supporting front wheels (1a,1b,2a,2b) ;
a rear wheel frame (8) for supporting rear wheels (3a,3b,4a,4b);
a backbone member (9) having an approximately rectangular hollow cross-section and coupling the front wheel frame (7) to the rear wheel frame (8);
a plurality of battery-accommodating hollow frames (91a,91b) disposed to the right and left side surfaces of the backbone member (9) so as to lie parallel to each other and perpendicular to the longitudinal direction of the backbone member (9); and
batteries (100) accommodated in the hollow frames (91a,91b) for feeding power to a plurality of in-wheel motors (11a,11b,21a,21b,31a,31b,41a,41b) built in respective wheels (1a,1b,2a,2b,3a,3b,4a,4b),
wherein the in-wheel motors and the batteries (100) are respectively divided into two systems, the batteries of one system are accommodated in the hollow frames (91a) disposed to one side of the backbone member (9) and supply power to front front-wheels (1a,1b) and rear rear-wheels (4a,4b), and the batteries of the other system are accommodated in the hollow frames (91b) disposed to the other side of the backbone member (9) and supply power to rear front-wheels (2a,2b) and front rear-wheels (3a,3b).

2. The body construction of an eight-wheel drive electric car according to Claim 1, wherein inverters (13a,13b,43a,43b) for the in-wheel motors are arranged next to the corresponding in-wheel motors either in the front wheel frame (7) or in the rear wheel frame (8) and power lines (120,130) from the batteries (100) of said systems to the inverters (13a, 13b, 23a, 23b, 33a, 33b, 43a, 43b) for respective in-wheel motors are laid down so as to extend through the hollow (90) of the backbone member (9).

3. The body construction of an eight-wheel drive electric car according to Claim 2, wherein the front wheel frame (7) and the rear wheel frame (8) is formed so as to have a frame structure having substantially the same height as those of the battery-accommodating hollow frames (91a,91b) and the inverters (13a, 13b, 43a, 43b) are arranged in the frame structure.

## Patentansprüche

1. Aufbaukonstruktion (6) eines elektrischen Fahrzeugs mit Achtradantrieb, bei dem Batterien zur Einspeisung eines Stroms in eine Vielzahl von Radnabenmotoren in einem Bodenabschnitt eines Fahrzeugaufbaus untergebracht sind; **gekennzeichnet durch**:
einen Vorderradrahmen (7) zur Aufhängung von Vorderrädern (1a, 1b, 2a, 2b);
einen Hinterradrahmen (8) zur Aufhängung von Hinterrädern (3a, 3b, 4a, 4b);
ein Zentralträgerelement (9) mit einem ungefähr rechteckigen Hohlquerschnitt, der den Vorderradrahmen (7) mit dem Hinterradrahmen (8) verbindet;
eine Vielzahl von Hohlrahmen (91 a, 91 b) zur Batterieunterbringung, die an den rechten und linken Seitenflächen des Zentralträgerelements (9) angeordnet sind, so dass sie parallel zueinander und senkrecht zur Längsrichtung des Zentralträgerelements (9) liegen; und
in den Hohlrahmen (91a, 91b) untergebrachte Batterien (100) zur Einspeisung von Strom in eine Vielzahl von Radnabenmotoren (11 a, 11 b, 21 a, 21 b, 31 a, 31 b, 41 a, 41 b), die in die jeweiligen Räder (1a, 1b, 2a, 2b, 3a, 3b, 4a, 4b) eingebaut sind,
wobei die Radnabenmotoren und die Batterien (100) jeweils in zwei Systeme unterteilt sind, so dass die Batterien eines Systems in den Hohlrahmen (91 a) untergebracht sind, die auf einer Seite des Zentralträgerelements (9) angeordnet sind und Strom in die vorderen Vorderräder (1a, 1b) und die hinteren Hinterräder (4a, 4b) einspeisen, während die Batterien des anderen Systems in den Hohlrahmen (91 b) untergebracht sind, die auf der anderen Seite des Zentralträgerelements (9) angeordnet sind und Strom in die hinteren Vorderräder (2a, 2b) und die vorderen Hinterräder (3a, 3b) einspeisen.

2. Aufbaukonstruktion eines elektrischen Fahrzeugs mit Achtradantrieb gemäß Anspruch 1, wobei Wechselrichter (13a, 13b, 43a, 43b) für die Radnabenmotoren neben entsprechenden Radnabenmotoren entweder im Vorderradrahmen (7) oder im Hinterradrahmen (8) angeordnet sind und Stromleitungen (120, 130) von den Batterien (100) der Systeme zu den Wechselrichtern (13a, 13b, 23a, 23b, 33a, 33b, 43a, 43b) für die jeweiligen Radnabenmotoren verlegt sind, so dass sie durch den Hohlraum (90) des Zentralträgerelements (9) verlaufen.

3. Aufbaukonstruktion eines elektrischen Fahrzeugs mit Achtradantrieb gemäß Anspruch 2, wobei der Vorderradrahmen (7) und der Hinterradrahmen (8) so geformt sind, dass sie eine Rahmenstruktur haben, welche im Wesentlichen dieselbe Höhe hat wie die Hohlrahmen (91 a, 91 b) zur Batterieunterbringung, und die Wechselrichter (13a, 13b, 43a, 43b) in der Rahmenstruktur angeordnet sind.

## Revendications

1. Une construction de carrosserie (6) d'une voiture électrique à huit roues motrices, dans laquelle des batteries pour alimenter en énergie une pluralité de moteurs-roues sont hébergées dans une portion de plancher d'une carrosserie de voiture, **caractérisée par** :
un cadre de roues avant (7) pour soutenir les roues avant (1a, 1b, 2a, 2b) ;
un cadre de roues arrière (8) pour soutenir les roues arrière (3a, 3b, 4a, 4b) ;
un membre de poutre centrale (9) ayant une coupe transversale creuse approximativement rectangulaire et couplant le cadre de roues avant (7) au cadre de roues arrière (8) ;
une pluralité de cadres creux hébergeant les batteries (91a, 91b) disposés sur les surfaces latérales gauche et droite du membre de poutre centrale (9) de façon à reposer parallèlement les uns aux autres et perpendiculairement à la direction longitudinale du membre de poutre centrale (9) ; et
des batteries (100) hébergées dans les cadres creux (91 a, 91 b) pour alimenter en énergie une pluralité de moteurs-roues (11a, 11b, 21a, 21b, 31a, 31b, 41a, 41b) incorporés dans des roues respectives (1a, 1b, 2a, 2b, 3a, 3b, 4a, 4b),
dans laquelle les moteurs-roues et les batteries (100) sont répartis respectivement en deux systèmes, les batteries d'un système sont hébergées dans les cadres creux (91a) disposés d'un côté du membre de poutre centrale (9) et fournissent de l'énergie aux roues avant avant (1a, 1b) et aux roues arrière arrière (4a, 4b), et les batteries de l'autre système sont hébergées dans les cadres creux (91b) disposés de l'autre côté du membre de poutre centrale (9) et fournissent de l'énergie aux roues avant arrière (2a, 2b) et aux roues arrière avant (3a, 3b).

2. La construction de carrosserie d'une voiture électrique à huit roues motrices selon la revendication 1, dans laquelle des inverseurs (13a, 13b, 43a, 43b) pour les moteurs-roues sont agencés à côté des moteurs-roues correspondants soit dans le cadre de roues avant (7) soit dans le cadre de roues arrière (8) et des conduites d'énergie (120, 130) des batteries (100) desdits systèmes aux inverseurs (13a, 13b, 23a, 23b, 33a, 33b, 43a, 43b) pour les moteurs-roues respectifs sont posées de façon à s'étendre à travers le creux (90) du membre de poutre centrale (9).

3. La construction de carrosserie d'une voiture électrique à huit roues motrices selon la revendication 2, dans laquelle le cadre de roues avant (7) et le cadre de roues arrière (8) sont formés de sorte à avoir une structure de cadre ayant essentiellement la même hauteur que celles des cadres creux hébergeant les batteries (91a, 91b) et les inverseurs (13a, 13b, 43a, 43b) sont agencés dans la structure de cadre.
